# EUROPEAN PATENT SPECIFICATION

(11) **EP 0 719 798 B1**
(45) Date of publication and mention of the grant of the patent: **14.07.1999**
(21) Application number: 95120361.1
(22) Date of filing: 21.12.1995
(51) Int. Cl.: C08F 10/02, C08F 4/649

(54) **Process for the (co)polymerization of ethylene**
Verfahren zur (Co)Polmerisation von Ethylen
Procédé de (co)polymérisation d'éthylène

(30) Priority: 29.12.1994 IT MI942673
(43) Date of publication of application: 03.07.1996
(73) Proprietor: Montell Technology Company bv, 2132 MS Hoofddorp (NL)
(72) Inventor: Dall'Occo, Tiziano, I-44100 Ferrara (IT); Morini, Giampiero, I-27058 Voghera (PV) (IT); Albizzati, Enrico, I-28041 Arona (NO) (IT)
(74) Representative: Zanoli, Enrico

(56) References cited:
- EP-A- 0 362 705
- EP-A- 0 452 156
- EP-A- 0 633 270
- US-A- 5 200 502

## Description

The present invention relates to a process for the polymerization of ethylene and its mixtures with CH₂=CHR α-olefins, where R is an alkyl, cycloalkyl or aryl radical having 1-12 carbon atoms, comprising at least one stage of suspension polymerization in a liquid medium, carried out in the presence of a catalyst comprising the product of the reaction between: (A) a solid catalytic component comprising a titanium compound containing at least one titanium-halogen bond and a magnesium halide in an active form; and, (B) an Al-alkyl compound. Components (A) and (B) are precontacted, in an inert hydrocarbon solvent and in the absence of polymerizable olefin, with particular electron-donor compounds. In this way the problems of fouling in the reactor in which suspension polymerization takes place are reduced. Thus, a further aspect of the invention relates to a method for reducing fouling in reactors during the (co)polymerization of ethylene, in suspension in a liquid medium, by precontacting of the catalytic components (A) and (B) with particular electron-donor compounds in appropriate conditions.

Processes of (co)polymerization of ethylene, in suspension in a liquid medium, in the presence of a Ziegler-Natta catalyst, are well known to persons skilled in the art. In processes of this type, polymerization takes place at temperatures below the melting point of the polymer in a liquid medium in which the polymer that forms is essentially insoluble. Ethylene and any other monomers are dissolved in the diluent and the polymer is obtained in the form of discrete particles. In general, polymerization is carried out in reactors of the loop type, in which the suspension is caused to circulate inside the loop, or in reactors of the vessel type, in which the suspension is maintained in agitation by mechanical means. Either low-boiling diluents, for example propane, butane or isobutane, or high-boiling diluents, for example hexane or heptane, can be used as the liquid medium.

Suspension polymerization in a liquid medium is sometimes followed by one or more stages of gas-phase polymerization. In these cases the quantity of polymer produced in the stage of suspension polymerization is generally low, preferably less than 1000 grams of polymer per gram of catalyst.

The Ziegler-Natta catalysts used in processes of this type are generally obtained by reaction of: (i) a solid component comprising a compound of a transition metal, usually titanium, supported on an active form of a magnesium halide, with (ii) an Al-alkyl compound, generally an Al-trialkyl. The transition-metal compound and the magnesium halide can be supported on an inert support, for example silica.

A problem that is generally encountered in processes in suspension is fouling of the polymerization reactors and apparatus. In addition to the particles of polymer in discrete form, it is possible that there will be formation of microparticles of polymer, dispersed in the diluent, and these tend to adhere to the reactor walls, to the mechanical means for agitation and to the systems for feed and discharge of the reactor. These microparticles contain catalytically active species, for which polymerization continues even after deposition of the particles on the polymerization apparatus. It is then possible for large agglomerates of polymer to form, and these can cause problems in operation of reactor, with consequent interruption of polymerization.

There is, moreover, worsening of the morphological properties of the polymer, in that the granulometric distribution becomes wider and there is a decrease of the bulk density. This problem is particularly serious when suspension polymerization is followed by one or more stages of gas-phase polymerization, where it is important that the polymer should have good morphology and high bulk density.

One possible cause of these problems is the presence of catalytically active compounds in the form of a micro-suspension or dissolved in the diluent in which polymerization takes place.

These compounds can be generated by partial solubilization of the transition-metal compound present in the catalytic component (i) or by its partial extraction by reaction with the Al-alkyl compound (ii). The problem is particularly serious when ethylene is being polymerized, on account of the high reactivity of this monomer.

It has now been found that it is possible to (co)polymerize ethylene in a controlled manner, in suspension in a liquid medium, in the presence of a Ziegler-Natta catalyst comprising the product of the reaction between a solid catalytic component, comprising a titanium compound and a magnesium halide in active form, and an Al-alkyl compound, the said liquid medium containing, in addition, one or more catalytically active compounds of titanium, when the solid catalytic component and the Al-alkyl compound are precontacted in particular molar ratios with an electron-donor compound selected from the 1,3-diethers that are capable of substantially inhibiting the activity of the catalytically active compounds contained in the liquid medium without inhibiting, to any great extent, the activity of the said catalyst.

Surprisingly, it was seen that by using low molar ratios of the electron-donor compound relative to total titanium, it is possible to conduct the process evenly and with high yields, obtaining a polymer with good morphological characteristics.

Therefore the subject of the present invention is a process for the polymerization of ethylene and its mixtures with CH₂=CHR α-olefins, where R is an alkyl, cycloalkyl or aryl radical having 1-12 carbon atoms, comprising at least one stage of suspension polymerization in a liquid medium, carried out in the presence of a catalyst comprising the product of the reaction between:
(A) a solid catalytic component comprising a titanium compound containing at least one titanium-halogen bond supported on a magnesium halide in an active form; and,
(B) an Al-alkyl compound;
   the said liquid medium also containing, in the form of a microsuspension or dissolved, one or more unsupported catalytically active titanium compounds, characterized in that the said components (A) and (B) are precontacted, in an inert hydrocarbon solvent and in the absence of polymerizable olefin, with an electron-donor compound selected from the 1,3-diethers that are capable, when submitted to a standard test of polymerization of ethylene carried out in the presence of a catalyst as previously defined of substantially inhibiting the activity of the said unsupported titanium compounds contained in the liquid medium and of not inhibiting, to an extent greater than 30%, based on the activity of the catalyst obtained by precontacting the components (A) and (B) in the absence of 1,3-diether, the catalytic activity of the said catalyst, the said electron-donor compound being present in a molar ratio relative to total titanium of less than 5:1. The electron-donor compound is preferably used in molar ratios relative to total titanium of less than 2:1, and more preferably less than 1:1.

The liquid medium in which polymerization is carried out is selected from among the hydrocarbon solvents. Non-limitative examples of these solvents are: propane, butane, isobutane, pentane, isopentane, hexane, heptane.

The suspension polymerization is generally carried out at a temperature between 0 and 100°C and at pressures between 0 and 20 bar. The titanium compound present in catalytic component (A) is preferably selected from the compounds with formula TiXₘ(OR)ₙ₋ₘ, where n is the valence of titanium, m is a number between 1 and n, X is halogen, R is an alkyl, cycloalkyl or aryl radical that has 1-12 carbon atoms or a-COR group. Non-limitative examples of titanium compounds are: TiCl₄, TiCl₃(OR), TiCl₂(OR)₂, TiCl₃, TiCl₂(OR), where R has the meaning described previously, preferably ethyl or butyl.

The magnesium halides in active form are well known from the literature; they are characterized by X-ray spectra in which the most intense diffraction line that appears in the spectrum of the non-active halide is of diminished intensity and in the said spectrum a halo is observed, the maximum intensity of which is shifted towards lower angles relative to that of the most intense line. The magnesium halide is preferably MgCl₂.

The solid catalytic component (A) is preferably in the form of spherical particles. Examples of catalytic components in spherical form are described in Patent Applications EP-A-553805, EP-A-553806, EP-A-601525 and EP-A-604846.

The electron-donor compound is preferably selected from among the 1,3-diethers that have at least one sterically hindered group. Non-limitative examples of 1,3-diethers are: 2-methyl-2-isopropyl-1,3-diethoxypropane, 2,2-diisobutyl-1,3-diethoxypropane, 2,2-diphenyl-1,3-dipropoxypropane, 2,2-diphenyl-1,3-dipentoxypropane, 2,2-diphenyl-1-methoxy-3-pentoxypropane, 2,2-dibenzyl-1,3-diethoxypropane, 2,2-bis(cyclohexylmethyl)-1,3-diethoxypropane, 2-isopentyl-2-isopropyl-1,3-diethoxypropane, 2,2,4-trimethyl-1,3-dibutoxypentane, 2-isopropyl-2-(3,7-dimethyloctyl)-1,3- dibutoxypropane, 2,2-diisopropyl-1,3-dipropoxypropane, 2- isopropyl-2-cyclohexylmethyl-1,3-dipentoxypropane, 2,2-diisopentyl-1,3-diethoxypropane, 2-isopropyl-2-cyclopentyl-1,3-diethoxypropane, 2,2-dicyclopentyl-1,3-dipropoxypropane, 2-heptyl-2-pentyl-1,3-diethoxypropane, 2,2-dicyclohexyl-1,3-dibutoxypropane, 2,2-dipropyl-1,3-diethoxypropane, 2-isopropyl-2-isobutyl-1,3-dipentoxypropane.

The stage of suspension polymerization is preferably followed by one or more stages of gas-phase polymerization, conducted in fluidized-bed or mechanically-stirred reactors. In this case, the quantity of polymer produced in the stage of suspension polymerization is between 1 and 1000 grams per gram of solid catalytic component (A), preferably between 10 and 500 g/g, and more preferably between 20 and 300 g/g.

The process of the present invention finds appropriate application in the preparation of homopolymers of ethylene and copolymers of ethylene with α-olefins that have 3-14 carbon atoms, the said copolymers containing more than 80% in moles of units derived from the ethylene. Non-limitative examples of α-olefins are: propylene, 1-butene, 1-pentene, 4-methyl-1-pentene, 1-hexene, 1-octene.

A further aspect of the present invention relates to a method for reducing fouling in reactors during polymerization of ethylene and its mixtures with CH₂=CHR α-olefins, where R is an alkyl, cycloalkyl or aryl radical having 1-12 carbon atoms, carried out in suspension in a liquid medium selected from hydrocarbon solvents and in the presence of a catalyst comprising:
(b) a solid catalytic component comprising a titanium compound containing at least one titanium-halogen bond supported on a magnesium halide in an active form; and,
(c) an Al-alkyl compound;
   the said liquid medium also containing, in the form of a microsuspension or dissolved, one or more unsupported catalytically active titanium compounds, characterized in that the said components (A) and (B) are precontacted, in an inert hydrocarbon solvent and in the absence of polymerizable olefin, with a 1,3-diether in a quantity such that the molar ratios 1,3-diether/total titanium are below 5:1, the said 1,3-diether being capable, when submitted to a standard test of polymerization of ethylene carried out in the presence of a catalyst as previously defined, of substantially inhibiting the activity of the said unsupported titanium compounds and of not inhibiting, to an extent greater than 30%, based on the activity of the catalyst obtained by precontacting the components (A) and (B) in the absence of 1,3-diether, the catalytic activity of the said catalyst.
   The standard polymerization test, the operational details of which are described below, is conducted in the following way.

Components (A) and (B) are precontacted with the 1,3-diethers in an inert hydrocarbon solvent in the absence of polymerizable olefin for a period of time and under operating conditions as described later. At the end of the period of precontact, an aliquot of the suspension containing the catalyst is sent to a polymerization reactor where the activity of the catalyst is evaluated in standard conditions. Another aliquot of the suspension containing the catalyst is filtered, separating the solid from the mother liquor, and the latter is sent to a polymerization reactor where the ability to inhibit the titanium compounds extracted from the solid catalytic component is evaluated. The 1,3-diethers that are capable of substantially inhibiting polymerization in the mother liquor and which at the same time do not inhibit, to an extent greater than 30%, the activity of the catalyst, having as reference the activity of the catalyst obtained by precontacting the components (A) and (B) in the absence of 1,3-diether, are considered to be suitable for use in the method of the present invention.

The molar ratio 1,3-diether/total titanium is preferably below 2:1, and more preferably below 1:1.

Surprisingly, it was seen that with the method of the present invention, the problems of fouling that are typical of processes of suspension polymerization in a liquid medium are avoided.

The method of the present invention finds appropriate application in processes of preparation of homopolymers of ethylene and copolymers of ethylene with α-olefins that have 3-14 carbon atoms, the said copolymers containing more than 80% in moles of units derived from the ethylene. Non-limitative examples of α-olefins are: propylene, 1-butene, 1-pentene, 4-methyl-1-pentene, 1-hexene, 1-octene.

The following examples are given by way of illustrating the present invention and are non-limitative.

The properties indicated are determined according to the following methods:
- MIE flow index: ASTM-D 1238, condition E
- MIF flow index: ASTM-D 1238, condition F
- Bulk density: DIN-53194
- Morphology of the polymer: ASTM-D 1921-63
- Intrinsic viscosity: ASTM 2857-70

### EXAMPLES

### Preparation of the solid component

### Preparation of the spherical support (MgCl₂/EtOH ADDUCT)

The adduct of magnesium chloride and alcohol was prepared following the method described in Example 2 of USP 4 399 054, but operating at 2000 rpm instead of at 10000 rpm. The adduct containing about 3 moles of alcohol had average size of about 60 µm with a dispersion range of about 30-90 µm.

### General method of preparation of the solid component

The spherical support prepared according to the conditions stated above was submitted to a heat treatment, in a stream of N₂, in the temperature range 50-150°C until spherical particles were obtained with a residual alcohol content of about 35% (1.1 mol of alcohol per mole of MgCl₂).
300 g of this support were loaded into a 5000 cm³ reactor in suspension with 3000 cm³ of anhydrous hexane. While stirring, and at room temperature, a hexane solution of AlEt₃ (107 g/l) was slowly supplied, to give a molar ratio Al/EtOH of about 0.5. It was heated to 60°C and was maintained at this temperature for 60 min, and the solvent was removed at the end by evaporation.
260 g of support obtained in this way were loaded into a 5000 cm³ reactor together with 3000 cm³ of anhydrous hexane. While stirring, 242 g of Ti(OBu)₄ was fed in at room temperature in 30 min.
Stirring was continued for a further 30 min and then 350 g of SiCl₄ diluted with 250 cm³ of hexane were fed in at room temperature in a time of 30 min. It was heated to 65°C in 40 min and the temperature was maintained for 3 hours, then the liquid phase was separated by sedimentation and siphoning. Then 7 washings with hexane were executed (3000 cm³ each time), of which 3 were at 60°C and 4 were at room temperature.
The component in spherical form was dried at 50°C under vacuum.
Its characteristics were as follows:
- Total titanium 7.95% (by weight)
- Mg 11.75% (by weight)
- Cl 43.2% (by weight)
- residual Al 0.45% (by weight)
- OEt 6% (by weight)
- OBu 19.8% (by weight)

### Examples 1-5

### Standard Test for polymerization of ethylene

### 1) Precontact stage.

100 ml of hexane, containing 5 g of AlEt₃ in solution and the amount of solid component specified in Table 1, were introduced into a 250-ml jacketed and thermostatically controlled glass reactor. Then the electron-donor compound was added to the mixture, stirred at a temperature of 15°C for 15 min, and stirring was continued for a further 2 min.

### 2) Test of polymerization of the catalyst.

10 ml of the catalytic suspension prepared as described previously were introduced into a 750-ml jacketed and thermostatically controlled glass reactor, operating with a flow of ethylene such as to maintain a pressure of 80 mmHg and containing 500 ml of hexane. Polymerization was carried out at a temperature of 25°C and without further addition of Al-alkyl compound. The conditions and the results are presented in Tables 1 and 2.

### 3) Test of polymerization of the mother liquor.

An aliquot of the catalytic suspension prepared as described in 1) was submitted to filtration. 50 ml of the mother liquor recovered were then introduced into a glass autoclave with capacity of 100 ml. Polymerization was conducted under a pressure of 4 bar of ethylene, at a temperature of 70°C for 60 min without further addition of Al-alkyl compound. The conditions and the results are presented in Table 3.

As can be seen from the data presented, the 1,3-diethers used are capable of completely inhibiting polymerization in the mother liquor.

### Example 6

Working in a hydrogen atmosphere, 900 ml of a solution containing 5 mmol of TEAL in 1000 ml of hexane were introduced into a 2.5-litre autoclave, equipped with a magnetic paddle stirrer, manometer, temperature indicator, catalyst charging system, feed lines for the monomers and jacket for thermostatic control, decontaminated beforehand by washing with ethylene at 70°C.

The catalytic suspension was prepared separately, by placing 50 ml of the solution of TEAL previously prepared, and a quantity of from 10 to 15 grams of solid component a) in a test-tube of the Schlenk type, at a temperature of 25°C. The two components were left in contact for 5 min; at the end of this time, the aliquot of 2,2-diphenyl-1,3-dipropoxypropane (electron-donor compound c) stated in Table 4 was added. The components were left in contact for a further 2 min and then the suspension was introduced into the autoclave.
The temperature of the autoclave was raised to 85°C, then hydrogen was supplied up to a pressure of 6.3 bar and ethylene up to a total pressure of 11.6 bar, which was kept constant throughout polymerization.
After 60 min, polymerization was interrupted by introducing 0.6 litre (at STP) of CO into the autoclave and cooling the autoclave to 30°C. The polymer suspension was then filtered and the polymer obtained was dried at 60°C under vacuum to constant weight. The conditions and the results of polymerization are presented in Table 4. The polymer was obtained in the form of discrete particles having excellent morphology. No problems of fouling of the polymerization apparatus were encountered.

### Example 7 (comparison)

Polymerization was carried out as described in Example 5 except for the fact that no 1,3-diether was used. The conditions and the results of polymerization are shown in Table 4. The polymer was in the form of agglomerates and there were serious problems of fouling of the polymerization apparatus.

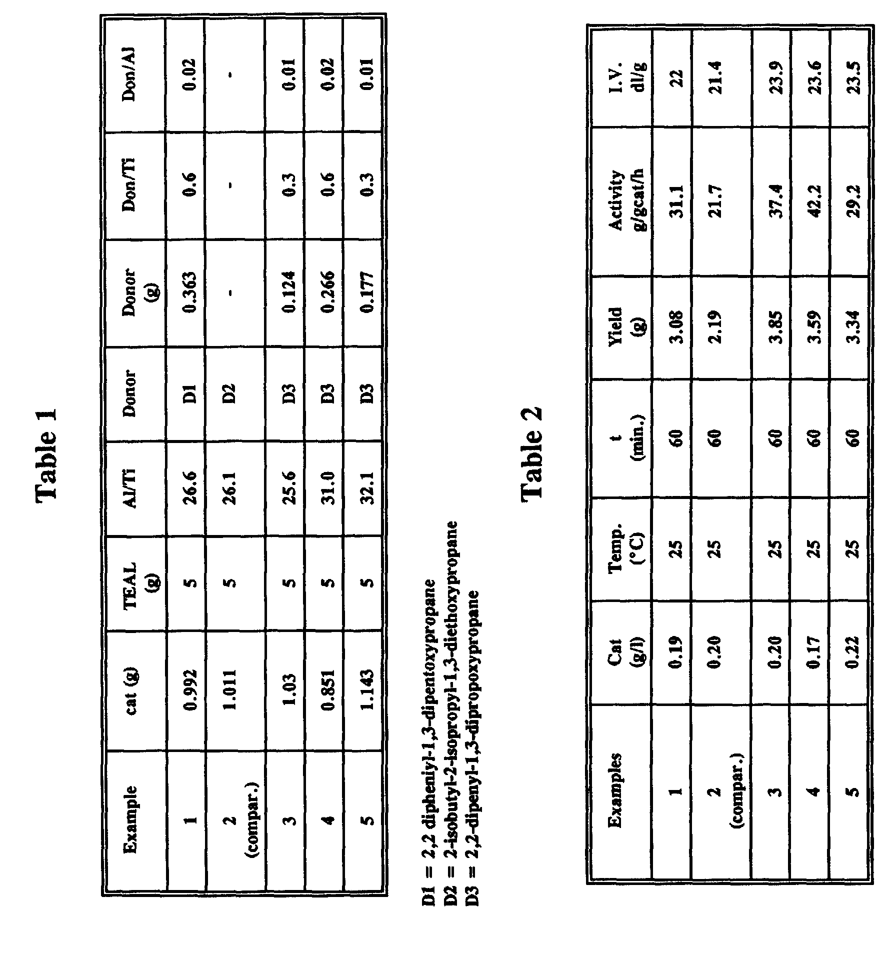

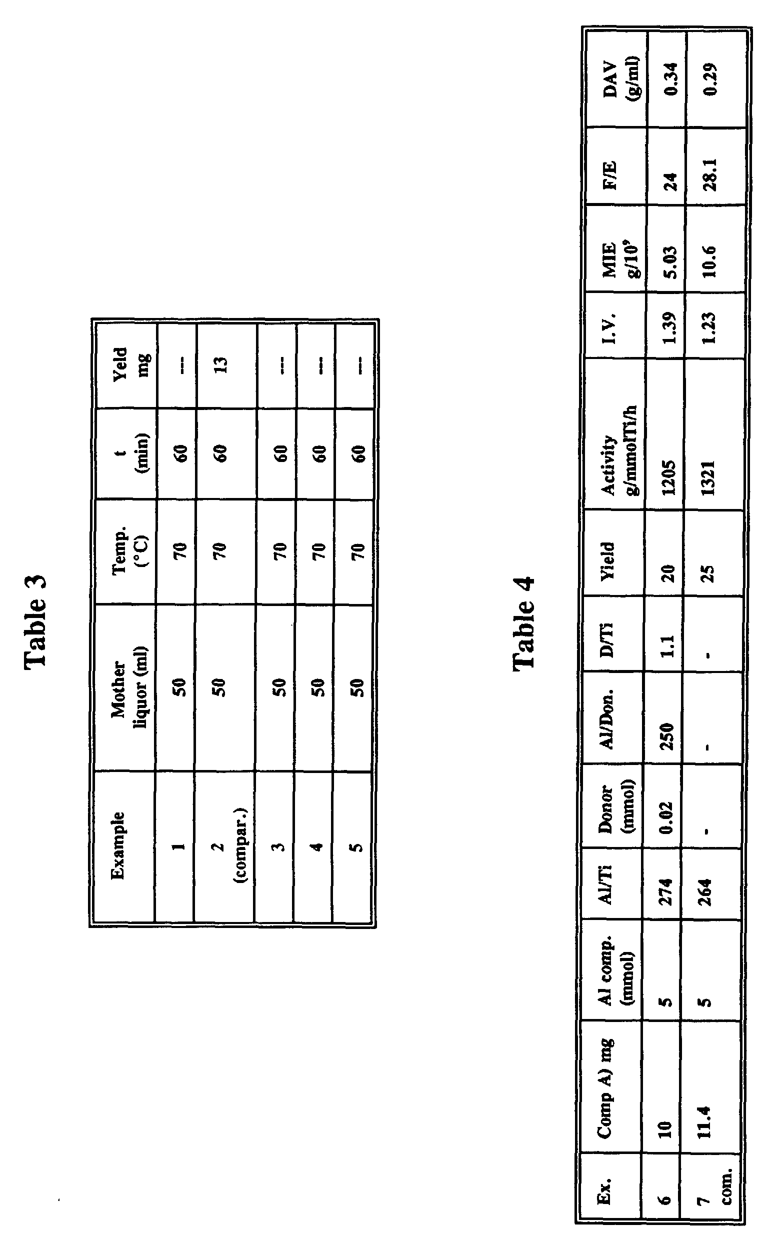

## Claims

1. Process for the polymerization of ethylene and its mixtures with CH₂=CHR α-olefins, where R is an alkyl, cycloalkyl or aryl radical having 1-12 carbon atoms, comprising at least one stage of suspension polymerization in a liquid medium, selected from hydrocarbon solvents, carried out in the presence of a catalyst comprising the product of the reaction between:
(A) a solid catalytic component comprising a titanium compound containing at least one titanium-halogen bond supported on a magnesium halide in an active form; and,
(B) an Al-alkyl compound;
the said liquid medium also containing, in the form of a microsuspension or dissolved, one or more unsupported catalytically active titanium compounds, characterized in that the said components (A) and (B) are precontacted, in an inert hydrocarbon solvent and in the absence of polymerizable olefin, with an electron-donor compound selected from the 1,3-diethers that are capable, when submitted to a standard test of polymerization of ethylene carried out according the procedure set forth in the description, in the presence of a catalyst as previously defined, of substantially inhibiting the activity of the said unsupported titanium compounds contained in the liquid medium and of not inhibiting, to an extent greater than 30%, based on the activity of the catalyst obtained by precontacting the components (A) and (B) in the absence of 1,3-diether, the catalytic activity of the said catalyst, the said electron-donor compound being present in a molar ratio relative to total titanium of less than 5:1.

2. Process according to Claim 1, in which the electron-donor compound is present in a molar ratio relative to the total titanium of less than 2:1.

3. Process according to Claim 1, in which the electron-donor compound is present in a molar ratio relative to the total titanium of less than 1:1.

4. Process according to Claim 1, in which the liquid medium in which suspension polymerization is carried out is a hydrocarbon solvent selected from propane, butane, isobutane, pentane, isopentane, hexane, and heptane.

5. Process according to one or more of the preceding claims, in which, in the stage of suspension polymerization, polymer is produced in a quantity between 1 and 1000 grams per gram of solid catalytic component (A).

6. Process according to Claim 5, in which the stage of suspension polymerization in a liquid medium is followed by one or more stages of gas-phase polymerization.

7. Process according to Claim 6, in which the gas-phase polymerization is conducted in a fluidized-bed or mechanically-stirred reactor.

8. Process according to one or more of the preceding claims, in which the titanium compound present in the solid catalytic component (A) is selected from compounds with the formula TiXₘ(OR)ₙ₋ₘ, where n is the valence of titanium, m is a number between 1 and n, X is halogen, R is an alkyl, cycloalkyl or aryl radical that has 1-12 carbon atoms or a -COR group.

9. Process according to one or more of the preceding claims, in which the magnesium halide is MgCl₂.

10. Process according to one or more of the preceding claims, in which the solid catalytic component (A) is in spherical form.

11. Process according to one or more of the preceding claims, in which the electron-donor compound is selected from the group consisting of: 2-methyl-2-isopropyl-1,3-diethoxypropane, 2,2-diisobutyl-1,3-diethoxypropane, 2,2-diphenyl-1,3-dipropoxypropane, 2,2-diphenyl-1,3-dipentoxypropane, 2,2-diphenyl-1-methoxy-3-pentoxypropane, 2,2-dibenzyl-1,3-diethoxypropane, 2,2-bis-(cyclohexylmethyl)-1,3-diethoxypropane, 2-isopentyl-2-isopropyl-1,3-diethoxypropane, 2,2,4-trimethyl-1,3-dibutoxypentane, 2-isopropyl-2-(3,7-dimethyloctyl)-1,3-dibutoxypropane, 2,2-diisopropyl-1,3-dipropoxypropane, 2-isopropyl-2-cyclohexylmethyl-1,3-dipentoxypropane, 2,2-diisopentyl-1,3-diethoxypropane, 2-isopropyl-2-cyclopentyl-1,3-diethoxypropane, 2,2-dicyclopentyl-1,3-dipropoxypropane, 2-heptyl-2-pentyl-1,3-diethoxypropane, 2,2-dicyclohexyl-1,3-dibutoxypropane, 2,2-dipropyl-1,3-diethoxypropane, 2-isopropyl-2-isobutyl-1,3-dipentoxypropane.

12. Method for reducing fouling in reactors during polymerization of ethylene and its mixtures with CH₂=CHR α-olefins, where R is an alkyl, cycloalkyl or aryl radical having 1-12 carbon atoms, carried out in suspension in a liquid medium selected from hydrocarbon solvents,and in the presence of a catalyst comprising:
(b) a solid catalytic component comprising a titanium compound containing at least one titanium-halogen bond supported on a magnesium halide in an active form; and,
(c) an Al-alkyl compound;
the said liquid medium also containing, in the form of a microsuspension or dissolved, one or more unsupported catalytically active titanium compounds, characterized in that the said components (A) and (B) are precontacted, in an inert hydrocarbon solvent and in the absence of polymerizable olefin, with a 1,3-diether in a quantity such that the molar ratios 1,3-diether/total titanium are below 5:1, the said 1,3-diether being capable, when submitted to a standard test of polymerization of ethylene carried out according the procedure set forth in the description, in the presence of a catalyst as previously defined, of substantially inhibiting the activity of the said unsupported titanium compounds and of not inhibiting, to an extent greater than 30%, based on the activity of the catalyst obtained by precontacting the components (A) and (B) in the absence of 1,3-diether, the catalytic activity of the said catalyst.

13. Method according to Claim 12, in which the molar ratio 1,3-diether/total titanium is below 2:1.

14. Method according to Claim 12, in which the molar ratio 1,3-diether/total titanium is below 1:1.

15. Method according to Claim 12, in which the liquid medium in which suspension polymerization is conducted is a hydrocarbon solvent selected from propane, butane, isobutane, pentane, isopentane, hexane, and heptane.

16. Method according to one or more of the claims from 12 to 15, in which, in the stage of suspension polymerization, a polymer is produced in a quantity of between 1 and 1000 grams per gram of solid catalytic component (A).

17. Method according to one or more of the claims from 12 to 16, in which the titanium compound present in the solid catalytic component (A) is selected from compounds with the formula TiXₘ(OR)ₙ₋ₘ, where n is the valence of titanium, m is a number between 1 and n, X is halogen, R is an alkyl, cycloalkyl or aryl radical that has 1-12 carbon atoms or a -COR group.

18. Method according to one or more of the claims from 12 to 17, in which the magnesium halide is MgCl₂.

19. Method according to one or more of the claims from 12 to 18, in which the solid catalytic component (A) is in a spherical form.

20. Method according to one or more of the claims from 12 to 19, in which the electron-donor compound is selected from the group consisting of: 2-methyl-2-isopropyl-1,3-diethoxypropane, 2,2-diisobutyl-1,3-diethoxypropane, 2,2-diphenyl-1,3-dipropoxypropane, 2,2-diphenyl-1,3-dipentoxypropane, 2,2-diphenyl-1-methoxy-3-pentoxypropane, 2,2-dibenzyl-1,3-diethoxypropane, 2,2-bis-(cyclohexylmethyl)-1,3-diethoxypropane, 2-isopentyl-2-isopropyl-1,3-diethoxypropane, 2,2,4-trimethyl-1,3-dibutoxypentane, 2-isopropyl-2- (3,7-dimethyloctyl) -1,3-dibutoxypropane, 2,2-diisopropyl-1,3-dipropoxypropane, 2-isopropyl-2-cyclohexylmethyl-1,3-dipentoxypropane, 2,2-diisopentyl-1,3-diethoxypropane, 2-isopropyl-2-cyclopentyl-1,3-diethoxypropane, 2,2-dicyclopentyl-1,3-dipropoxypropane, 2-heptyl-2-pentyl-1,3-diethoxypropane, 2,2-dicyclohexyl-1,3-dibutoxypropane, 2,2-dipropyl-1,3-diethoxypropane, 2-isopropyl-2-isobutyl-1,3-dipentoxypropane.

## Patentansprüche

1. Verfahren für die Polymerisation von Ethylen und dessen Gemischen mit α-Olefinen CH₂=CHR, worin R einen Alkyl-, Cycloalkyl- oder Arylrest mit 1-12 Kohlenstoffatomen darstellt, umfassend mindestens eine Suspensionspolymerisationsstufe in einem flüssigen Medium, ausgewählt aus Kohlenwasserstofflösungsmitteln, die in Gegenwart eines Katalysators ausgeführt wird, umfassend das Produkt der Reaktion zwischen:
(A) einer festen katalytischen Komponente, umfassend eine Titanverbindung, die mindestens eine Titan-Halogen-Bindung enthält, die auf einem Magnesiumhalogenid in aktiver Form getragen wird; und
(B) einer Al-Alkyl-Verbindung;
wobei das flüssige Medium ebenfalls in Form einer Mikrosuspension oder gelöst ein oder mehrere ungetragene, katalytisch aktive Titanverbindungen enthält, dadurch gekennzeichnet, daß die Komponenten (A) und (B) in einem inerten Kohlenwasserstofflösungsmittel und in Abwesenheit von polymerisierbarem Olefin mit einer Elektronendonorverbindung vorkontaktiert werden, die ausgewählt ist aus den 1,3-Diethern, die, wenn sie einer Standard-Testpolymerisation von Ethylen, ausgeführt gemäß dem in der Beschreibung angeführten Verfahren in Gegenwart eines wie bereits definierten Katalysators unterzogen werden, die Aktivität der ungetragenen Titanverbindungen, die in dem flüssigen Medium enthalten sind, im wesentlichen inhibieren können und im Stande sind, die katalytische Aktivität des Katalysators in einem Ausmaß größer als 30%, bezogen auf die Aktivität des durch Vorkontaktieren der Komponenten (A) und (B) in Abwesenheit von 1,3-Diether erhaltenen Katalysators nicht zu inhibieren, wobei die Elektronendonorverbindung in einem Molverhältnis, bezogen auf das Gesamttitan, von weniger als 5:1 vorliegt.

2. Verfahren nach Anspruch 1, wobei die Elektronendonorverbindung in einem Molverhältnis, bezogen auf das Gesamttitan, von weniger als 2:1 vorliegt.

3. Verfahren nach Anspruch 1, wobei die Elektronendonorverbindung in einem Molverhältnis, bezogen auf das Gesamttitan, von weniger als 1:1 vorliegt.

4. Verfahren nach Anspruch 1, wobei das flüssige Medium, in dem die Suspensionspolymerisation ausgeführt wird, ein Kohlenwasserstofflösungsmittel darstellt, ausgewählt aus Propan, Butan, Isobutan, Pentan, Isopentan, Hexan und Heptan.

5. Verfahren nach einem oder mehreren der vorangehenden Ansprüche, wobei in der Stufe der Suspensionspolymerisation das Polymer in einer Menge zwischen 1 und 1000 Gramm pro Gramm fester katalytischer Komponente (A) hergestellt wird.

6. Verfahren nach Anspruch 5, wobei der Stufe der Suspensionspolymerisation in einem flüssigen Medium eine oder mehrere Stufen der Gasphasen-Polymerisation folgen.

7. Verfahren nach Anspruch 6, wobei die Gasphasen-Polymerisation in einem Wirbelschicht- oder mechanisch gerührtem Reaktor durchgeführt wird.

8. Verfahren nach einem oder mehreren der vorangehenden Ansprüche, wobei die in der festen katalytischen Komponente (A) vorliegende Titanverbindung ausgewählt ist aus Verbindungen der Formel TiXₘ(OR)ₙ₋ₘ, worin n die Wertigkeit von Titan darstellt, m eine Zahl zwischen 1 und n ist, X Halogen darstellt, R einen Alkyl-, Cycloalkyl- oder Arylrest, der 1-12 Kohlenstoffatome aufweist, oder eine Gruppe -COR darstellt.

9. Verfahren nach einem oder mehreren der vorangehenden Ansprüche, wobei das Magnesiumhalogenid MgCl₂ ist.

10. Verfahren nach einem oder mehreren der vorangehenden Ansprüche, wobei die feste katalytische Komponente (A) in Kugelform vorliegt.

11. Verfahren nach einem oder mehreren der vorangehenden Ansprüche, wobei die Elektronendonorverbindung ausgewählt ist aus der Gruppe, bestehend aus: 2-Methyl-2-isopropyl-1,3-diethoxypropan, 2,2-Diisobutyl-1,3-diethoxypropan, 2,2-Diphenyl-1,3-dipropoxypropan, 2,2-Diphenyl-1,3-dipentoxypropan, 2,2-Diphenyl-1-methoxy-3-pentoxypropan, 2,2-Dibenzyl-1,3-diethoxypropan, 2,2-Bis(cyclohexylmethyl)-1,3-diethoxypropan, 2-Isopentyl-2-isopropyl-1,3-diethoxypropan, 2,2,4-Trimethyl-1,3-dibutoxypentan, 2-Isopropyl-2-(3,7-dimethyloctyl)-1,3-dibutoxypropan, 2,2-Diisopropyl-1,3-dipropoxypropan, 2-Isopropyl-2-cyclohexylmethyl-1,3-dipentoxypropan, 2,2-Diisopentyl-1,3-diethoxypropan, 2-Isopropyl-2-cyclopentyl-1,3-diethoxypropan, 2,2-Dicyclopentyl-1,3-dipropoxypropan, 2-Heptyl-2-pentyl-1,3-diethoxypropan, 2,2-Dicyclohexyl-1,3-dibutoxypropan, 2,2-Dipropyl-1,3-diethoxypropan, 2-Isopropyl-2-isobutyl-1,3-dipentoxypropan.

12. Verfahren zur Verminderung von Ablagerungen in Reaktoren während der Polymerisation von Ethylen und dessen Gemischen mit α-Olefinen CH₂=CHR, worin R einen Alkyl-, Cycloalkyl- oder Arylrest mit 1-12 Kohlenstoffatomen darstellt, ausgeführt in Suspension in einem aus Kohlenwasserstofflösungsmitteln ausgewählten, flüssigen Medium, und in Gegenwart eines Katalysators, umfassend
(A) eine feste katalytische Komponente, umfassend eine Titanverbindung, die mindestens eine Titan-Halogen-Bindung enthält, die auf einem Magnesiumhalogenid in aktiver Form getragen wird; und
(B) eine Al-Alkyl-Verbindung;
wobei das flüssige Medium ebenfalls in Form einer Mikrosuspension oder gelöst ein oder mehrere ungetragene, katalytisch aktive Titanverbindungen enthält, dadurch gekennzeichnet, daß die Komponenten (A) und (B) in einem inerten Kohlenwasserstofflösungsmittel und in Abwesenheit von polymerisierbarem Olefin mit einem 1,3-Diether in einer Menge vorkontaktiert werden, so daß die Molverhältnisse 1,3-Diether/Gesamttitan unterhalb 5:1 liegen, wobei der 1,3-Diether, wenn er einer Standard-Testpolymerisation von Ethylen, ausgeführt gemäß dem in der Beschreibung angeführten Verfahren in Gegenwart eines wie vorstehend definierten Katalysators, unterzogen wird, die Aktivität der ungetragenen Titanverbindungen im wesentlichen inhibieren kann und im Stande ist, die katalytische Aktivität des Katalysators in einem Ausmaß größer als 30%, bezogen auf die Aktivität des durch Vorkontaktieren der Komponenten (A) und (B) in Abwesenheit von 1,3-Diether erhaltenen Katalysators nicht zu inhibieren.

13. Verfahren nach Anspruch 12, wobei das Molverhältnis 1,3-Diether/Gesamttitan unterhalb 2:1 liegt.

14. Verfahren nach Anspruch 12, wobei das Molverhältnis 1,3-Diether/Gesamttitan unterhalb 1:1 liegt.

15. Verfahren nach Anspruch 12, wobei das flüssige Medium, in dem die Suspensionspolymerisation ausgeführt wird, ein Kohlenwasserstofflösungsmittel darstellt, ausgewählt aus Propan, Butan, Isobutan, Pentan, Isopentan, Hexan und Heptan.

16. Verfahren nach einem oder mehreren der Ansprüche 12 bis 15, wobei in der Stufe der Suspensionspolymerisation ein Polymer in einer Menge zwischen 1 und 1000 Gramm pro Gramm der festen katalytischen Komponente (A) hergestellt wird.

17. Verfahren nach einem oder mehreren der Ansprüche 12 bis 16, wobei die in der festen katalytischen Komponente (A) vorliegende Titanverbindung ausgewählt ist aus Verbindungen der Formel TiXₘ(OR)ₙ₋ₘ, worin n die Wertigkeit von Titan darstellt, m eine Zahl zwischen 1 und n ist, X Halogen darstellt, R einen Alkyl-, Cycloalkyl- oder Arylrest, der 1-12 Kohlenstoffatome aufweist, oder eine Gruppe -COR darstellt.

18. Verfahren nach einem oder mehreren der Ansprüche 12 bis 17, wobei das Magnesiumhalogenid MgCl₂ ist.

19. Verfahren nach einem oder mehreren der Ansprüche 12 bis 18, wobei die feste katalytische Komponente (A) in Kugelform vorliegt.

20. Verfahren nach einem oder mehreren der Ansprüche 12 bis 19, wobei die Elektronendonorverbindung ausgewählt ist aus der Gruppe, bestehend aus: 2-Methyl-2-isopropyl-1,3-diethoxypropan, 2,2-Diisobutyl-1,3-diethoxypropan, 2,2-Diphenyl-1,3-dipropoxypropan, 2,2-Diphenyl-1,3-dipentoxypropan, 2,2-Diphenyl-1-methoxy-3-pentoxypropan, 2,2-Dibenzyl-1,3-diethoxypropan, 2,2-Bis(cyclohexylmethyl)-1,3-diethoxypropan, 2-Isopentyl-2-isopropyl-1,3-diethoxypropan, 2,2,4-Trimethyl-1,3-dibutoxypentan, 2-Isopropyl-2-(3,7-dimethyloctyl)-1,3-dibutoxypropan, 2,2-Diisopropyl-1,3-dipropoxypropan, 2-Isopropyl-2-cyclohexylmethyl-1,3-dipentoxypropan, 2,2-Diisopentyl-1,3-diethoxypropan, 2-Isopropyl-2-cyclopentyl-1,3-diethoxypropan, 2,2-Dicyclopentyl-1,3-dipropoxypropan, 2-Heptyl-2-pentyl-1,3-diethoxypropan, 2,2-Dicyclohexyl-1,3-dibutoxypropan, 2,2-Dipropyl-1,3-diethoxypropan, 2-Isopropyl-2-isobutyl-1,3-dipentoxypropan.

## Revendications

1. Un procédé de polymérisation de l'éthylène et de ses mélanges avec des α-oléfines CH₂=CHR, où R est un radical alkyle, cycloalkyle ou aryle comportant 1 à 12 atomes de carbone, comprenant au moins une étape de polymérisation en suspension dans un milieu liquide, choisi parmi les solvants hydrocarbonés. effectuée en présence d'un catalyseur comprenant le produit de la réaction entre :
(A) un composant catalytique solide comprenant un dérivé de titane comportant au moins une liaison titane-halogène supporté sur un halogénure de magnésium sous forme active ; et
(B) un dérivé alkyl-Al ;
ledit milieu liquide contenant en outre, sous la forme de micro-suspensions ou dissous, un ou plusieurs dérivés de titane catalytiquement actifs non supportés, caractérisé en ce que lesdits composants (A) et (B) sont mis en contact préalable, dans un solvant hydrocarboné inerte et en l'absence d'oléfines polymérisables, avec un composé donneur d'électrons choisi parmi les 1,3-diéthers qui sont capables, lorsqu'ils sont soumis à un essai normalisé de polymérisation de l'éthylène effectué selon le procédé décrit dans la description, en présence d'un catalyseur tel que défini ci-dessus, d'inhiber sensiblement l'activité desdits dérivés de titane non supportés contenus dans le milieu liquide et de ne pas inhiber, dans une mesure supérieure à 30 %, exprimée par rapport à l'activité du catalyseur obtenu par la mise en contact préalable des composants (A) et (B) en l'absence de 1,3-diéther, l'activité catalytique dudit catalyseur, ledit composé donneur d'électrons étant présent selon un rapport molaire par rapport au titane total inférieur à 5/1.

2. Un procédé selon la revendication 1, dans lequel le composé donneur d'électron est présent selon un rapport molaire par rapport au titane total inférieur à 2/1.

3. Un procédé selon la revendication 1, dans lequel le composé donneur d'électron est présent selon un rapport molaire par rapport au titane total inférieur à 1/1.

4. Un procédé selon la revendication 1, dans lequel le milieu liquide dans lequel on effectue la polymérisation en suspension est un solvant hydrocarboné choisi parmi propane, butane, isobutane, pentane, isopentane, hexane et heptane.

5. Un procédé selon une ou plusieurs des revendications précédentes, dans lequel, dans l'étape de polymérisation en suspension, on obtient du polymère en quantité comprise entre 1 et 1000 g/g de composant catalytique solide (A).

6. Un procédé selon la revendication 5, dans lequel l'étape de polymérisation en suspension dans un milieu liquide est suivie d'une ou plusieurs étapes de polymérisation en phase gazeuse.

7. Un procédé selon la revendication 6, dans lequel la polymérisation en phase gazeuse s'effectue dans un réacteur à lit fluidisé ou agité mécaniquement.

8. Un procédé selon une ou plusieurs des revendications précédentes, dans lequel le dérivé de titane présent dans le composant catalytique solide (A) est choisi parmi les dérivés répondant à la formule TiXₘ(OR)ₙ₋ₘ où n est la valence du titane, m est un nombre compris entre 1 et n, X est un halogène, R est un radical alkyle, cycloalkyle ou aryle comportant 1 à 12 atomes de carbone, ou un groupe -COR.

9. Un procédé selon une ou plusieurs des revendications précédentes, dans lequel l'halogénure de magnésium est MgCl₂.

10. Un procédé selon une ou plusieurs des revendications précédentes, dans lequel le composant catalytique solide (A) est sous forme sphérique.

11. Un procédé selon une ou plusieurs des revendications précédentes, dans lequel le composé donneur d'électrons est choisi dans le groupe consistant en :
2-méthyl-2-isopropyl-1,3-diéthoxypropane, 2,2-diisobutyl-1,3-diéthoxypropane, 2,2-diphényl-1,3-dipropoxypropane, 2,2-diphényl-1,3-dipentoxypropane, 2,2-diphényl-1-méthoxy-3-pentoxypropane, 2,2-dibenzyl-1,3-diéthoxypropane, 2,2-bis-(cyclohexylméthyl)-1,3-diéthoxypropane, 2-isopentyl-2-isopropyl-1,3-diéthoxypropane, 2,2,4-triméthyl-1,3-dibutoxypentane, 2-isopropyl-2-(3,7-diméthyloctyl)-1,3-dibutoxypropane, 2,2-diisopropyl-1,3-dipropoxypropane, 2-isopropyl-2-cyclohexylméthyl-1,3-dipentoxypropane, 2,2-diisopentyl-1,3-diéthoxypropane, 2-isopropyl-2-cyclopentyl-1,3-diéthoxypropane, 2,2-dicyclopentyl-1,3-dipropoxypropane, 2-heptyl-2-pentyl-1,3-diéthoxypropane, 2,2-dicyclohexyl-1,3-dibutoxypropane, 2,2-dipropyl-1,3-diéthoxypropane, 2-isopropyl-2-isobutyl-1,3-dipentoxypropane.

12. Un procédé pour diminuer le colmatage dans des réacteurs au cours de la polymérisation de l'éthylène et de ses mélanges avec des α-oléfines CH₂=CHR où R est un radical alkyle, cycloalkyle ou aryle comportant 1 à 12 atomes de carbone, effectué en suspension dans un milieu liquide choisi parmi les solvants hydrocarbonés et en présence d'un catalyseur comprenant :
(b) un composant catalytique solide comprenant un dérivé de titane comportant au moins une liaison titane-halogène supporté sur un halogénure de magnésium sous forme activée ; et
(c) un dérivé alkyl-Al ;
ledit milieu liquide contenant en outre, sous forme de micro-suspensions ou dissous. un ou plusieurs dérivés de titane catalytiquement actifs non supportés, caractérisé en ce que lesdits composants (A) et (B) sont mis en contact préalable, dans un solvant hydrocarboné inerte et en l'absence d'oléfines polymérisables, avec un 1,3-diéther en une quantité telle que les rapports molaires 1,3-diéther/titane total soient inférieurs à 5/1, ledit 1,3-diéther étant capable, lorsqu'il est soumis à un essai normalisé de polymérisation de l'éthylène effectué selon le protocole décrit dans la description, en présence d'un catalyseur tel que défini ci-dessus, d'inhiber sensiblement l'activité dudit dérivé de titane non supporté et de ne pas inhiber, dans une mesure supérieure à 30 %, exprimée par rapport à l'activité du catalyseur obtenu par la mise en contact préalable des composants (A) et (B) en l'absence de 1,3-diéther, l'activité catalytique dudit catalyseur.

13. Le procédé selon la revendication 12, dans lequel le rapport molaire 1,3-diéther/titane total est inférieur à 2/1.

14. Le procédé selon la revendication 12, dans lequel le rapport molaire 1,3-diéther/titane total est inférieur à 1/1.

15. Le procédé selon la revendication 12, dans lequel le milieu liquide dans lequel on effectue la polymérisation en suspension est un solvant hydrocarboné choisi parmi propane, butane, isobutane, pentane, isopentane, hexane et heptane.

16. Le procédé selon une ou plusieurs des revendications 12 à 15, dans lequel, dans l'étape de polymérisation en suspension, on obtient un polymère en une quantité comprise entre 1 et 1000 grammes par gramme de composant catalytique solide (A).

17. Un procédé selon une ou plusieurs des revendications 12 à 16, dans lequel le dérivé de titane présent dans le composant catalytique solide (A) est choisi parmi les dérivés de formule TiXₘ(OR)ₙ₋ₘ où n est la valence du titane, m est un nombre compris entre 1 et n, X est un halogène, R est un radical alkyle, cycloalkyle ou aryle comportant 1 à 12 atomes de carbone, ou un groupe COR.

18. Un procédé selon une ou plusieurs des revendications 12 à 17, dans lequel l'halogénure de magnésium est MgCl₂.

19. Un procédé selon une ou plusieurs des revendications 12 à 18, dans lequel le composant catalytique solide (A) est sous forme sphérique.

20. Un procédé selon une ou plusieurs des revendications 12 à 19, dans lequel le composé donneur d'électron est choisi dans le groupe consistant en :
2-méthyl-2-isopropyl-1,3-diéthoxypropane, 2,2-diiisobutyl-1,3-diéthoxypropane, 2,2-diphényl-1,3-dipropoxypropane, 2,2-diphényl-1,3-dipentoxypropane, 2,2-diphényl-1-méthoxy-3-pentoxypropane, 2,2-dibenzyl-1,3-diéthoxypropane, 2,2-bis-(cyclohexylméthyl)-1,3-diéthoxypropane, 2-isopentyl-2-isopropyl- 1,3-diéthoxypropane, 2,2,4-triméthyl-1,3-dibutoxypentane, 2-isopropyl-2-(3,7-diméthyloctyl)-1,3-dibutoxypropane, 2,2-diisopropyl-1,3-dipropoxypropane, 2-isopropyl-2-cyclohexylméthyl-1 ,3-dipentoxypropane, 2,2-diisopentyl-1,3-diéthoxypropane, 2-isopropyl-2-cyclopentyl-1,3-diéthoxypropane, 2,2-dicyclopentyl-1,3-dipropoxypropan, 2-heptyl-2-pentyl-1,3-diéthoxypropane, 2,2-dicyclohexyl-1,3-dibutoxypropane, 2,2-dipropyl-1,3-diéthoxypropane, 2-isopropyl-2-isobutyl-1,3-dipentoxypropane.
